(19) Europäisches Patentamt
European Patent Office
Office européen des brevets

(11) **EP 3 482 614 B1**

(12) **EUROPEAN PATENT SPECIFICATION**

(45) Date of publication and mention
of the grant of the patent:
**16.09.2020 Bulletin 2020/38**

(21) Application number: **17823936.4**

(22) Date of filing: **09.06.2017**

(51) Int Cl.:
*A01C 1/06* *(2006.01)*          *A01G 2/00* *(2018.01)*

(86) International application number:
**PCT/JP2017/021501**

(87) International publication number:
**WO 2018/008329 (11.01.2018 Gazette 2018/02)**

(54) **SEED, AND PLANT CULTIVATION METHOD**

SAATGUT UND PFLANZENKULTIVIERUNGSVERFAHREN

SEMENCE ET PROCÉDÉ DE CULTURE DE PLANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2016 JP 2016135866**

(43) Date of publication of application:
**15.05.2019 Bulletin 2019/20**

(73) Proprietor: **FUJIFILM Corporation**
**Tokyo 106-8620 (JP)**

(72) Inventor: **EJIRI, Kiyomi**
**Minami-ashigara-shi**
**Kanagawa 250-0193 (JP)**

(74) Representative: **Klunker IP**
**Patentanwälte PartG mbB**
**Destouchesstraße 68**
**80796 München (DE)**

(56) References cited:
**EP-A2- 0 236 088          JP-A- S5 611 703**
**JP-A- S5 739 723          JP-A- 2001 269 051**
**JP-A- 2005 034 045        JP-A- 2012 160 486**
**JP-A- 2012 160 486        JP-U- S55 178 310**

**Description**

BACKGROUND OF THE INVENTION

1. Field of the Invention

The present disclosure relates to a seed and a method for growing plants.

2. Description of the Related Art

Magnetic force has been known to promote germination and growth of plants, and a method for imparting magnetic force to a seed and a plant has been proposed.

For example, JP3539651B discloses a seed integrated with a fertilizer component containing a magnetic material, and a seed covered with a porous inorganic substance.

JP3493099B discloses a seed integrated with a fertilizer component containing a magnetic material, and a granular material formed by mixing the seed and soil.

EP 0 236 088 A2 teaches to apply a solution of a ferrous salt or electrolytic ferrous ion as activating ingredient to the seed and magnetizing the thus treated seed subsequently.

D2 JP 2001-269051 A is directed to a culture soil mixed with ferrite magnetic powder of a specific particle size, in which seed may germinate and a plant may grow.

Applying magnetic particles to a coating is known in other technical fields, e.g. in the field of magnetic recording mediums (JP 2012-160486 A).

SUMMARY OF THE INVENTION

According to the seed integrated with the growth material disclosed in JP3539651B and JP3493099B (hereinafter referred to as "integrated seed"), a germination rate can be improved.

However, upon confirmation of the inventors of the present invention, it became clear that, even in a case where the magnetic material that enables the improvement of the germination rate is contained as in the integrated seed disclosed in JP3539651A, in a case where a raw material seed is covered with a porous inorganic fine powder, conversely, the germination rate decreases compared with an innate germination rate that the raw material seed itself has.

In regard to the integrated seed disclosed in JP3493099A, the raw material seed is covered with soil, and therefore it is fully considered that the same tendency as the case of JP3539651A is shown.

An object of the one embodiment of the present invention is to provide a seed having a high germination rate.

In addition, an object of another embodiment of the present invention is to provide a method for growing plants using the seed having a high germination rate.

Specific means for solving the problems includes the following embodiments.

<1> A seed comprising a magnetized magnetic particle having a coercive force of 40 kA/m or higher on a surface of the seed.

<2> The seed according to <1>, in which the coercive force is from 40 kA/m to 319 kA/m.

<3> The seed according to <1>, in which the coercive force is from 120 kA/m to 239 kA/m.

<4> The seed according to any one of <1> to <3>, in which a saturation magnetization of the magnetic particle is 35 Am$^2$/kg or higher.

<5> The seed according to any one of <1> to <3>, in which a saturation magnetization of the magnetic particle is from 35 Am$^2$/kg to 130 Am$^2$/kg.

<6> The seed according to any one of <1> to <3>, in which a saturation magnetization of the magnetic particle is from 40 Am$^2$/kg to 80 Am$^2$/kg.

<7> The seed according to any one of <1> to <6>, further comprising a magnetic layer that includes the magnetic particle and a binding agent on the surface of the seed.

<8> A method for growing plants, comprising sowing the seed according to any one of <1> to <7> in soil.

<9> A method for growing plants, comprising sowing the seed according to any one of <1> to <7> in a growing medium for plants.

<10> The method for growing plants according to <9>, in which the growing medium for plants includes a substrate having voids, and a magnetized magnetic particle dispersedly carried by the substrate.

According to one embodiment of the present invention, the seed having a high germination rate is provided.

In addition, according to another embodiment of the present invention, the method for growing plants using the seed having a high germination rate is provided.

BRIEF DESCRIPTION OF THE DRAWINGS

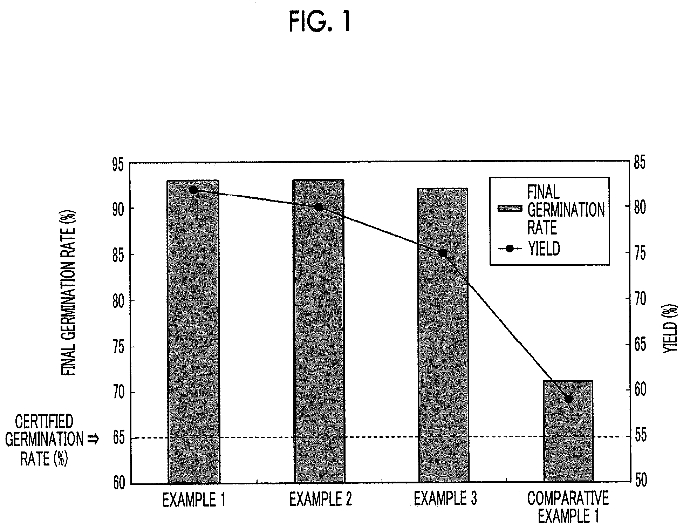

Fig. 1 is a graph comparing a final germination rate and a yield of a seed hydroponically grown by using absorbent cotton as a medium between Example 1, Example 2, Example 3, and Comparative Example 1.

DESCRIPTION OF THE PREFERRED EMBODIMENTS

Hereinafter, an example of an embodiment of a seed and a method for growing plants to which the present invention is applied will be described. However, the present invention is not limited to the following embodiment and can be carried out with appropriate modification within the scope of the object of the embodiment of the present invention.
A numerical value range indicated by using "to" in the present specification means a range including numerical values described before and after "to" as a minimum value and a maximum value.
In numerical value ranges described in the present specification in a stepwise manner, an upper limit value or a lower limit value described in one numerical value range may be replaced with an upper limit value or a lower limit value of a numerical value range of other stepwise description. In addition, in the numerical value ranges described in the present specification, an upper limit value or a lower limit value of the numerical value range may be replaced with values shown in examples.
In the present specification, unless otherwise specified, an amount of each component in a layer or in a growing medium for plants means a total amount of a plurality of substances present in the layer or in the growing medium for plants in a case where the plurality of substances corresponding to each of components are present in the layer or in the growing medium for plants.
In the present specification, "seeds common," which can be a raw material for the seed of the present disclosure, will be referred to as a "raw material seed" or simply as a "seed," for distinction from the seed of the present disclosure.

[Seed]

A seed of the present disclosure is a seed having, on a surface of thereof, a magnetized magnetic particle having a coercive force of 40 kA/m or higher. The seed of the present disclosure has an excellent germination rate.
The reason why such an effect is exhibited by the seed of the present disclosure is not clearly known; however, the inventors of the present invention speculate the reason as follows.
Since the seed of the present disclosure has the magnetized magnetic particle on the surface thereof, it is considered that the magnetic force of the magnetic particle effectively acts on a raw material seed. In addition, since the magnetic particle of the seed of the present disclosure has the coercive force of 40 kA/m or higher, which is a high value, the magnetic force is unlikely to attenuate, and therefore the magnetic force of the magnetic particle is considered to continuously act on the raw material seeds. As described above, since the magnetic force of the magnetic particle effectively and continuously acts on the raw material seed, the seed of the present disclosure is considered to have excellent germination rate.
On the other hand, the integrated seed disclosed in JP3539651A contains the magnetic material capable of improving the germination rate, but the raw material seed is covered with the porous inorganic fine powder, and therefore it is considered that the magnetic force of the magnetic material is unlikely to act on the raw material seed. Upon actual confirmation of the inventors of the present invention, it became clear that, conversely, the germination rate of the integrated seed disclosed in JP3539651A was lower than the innate germination rate that the raw material seed itself has.
In addition, the integrated seed disclosed in JP3493099A contains the magnetic material capable of improving the germination rate, but since the raw material seed is covered with soil, it is considered that the magnetic force of the magnetic material is unlikely to act on the raw material seed, and therefore a favorable germination rate cannot be obtained, similar to the integrated seed disclosed in JP3539651A.
Hereinafter, the seed of the present disclosure and the method for growing plants using the seed will be described in detail.
The coercive force (Hc) of the magnetic particle is 40 kA/m or higher, preferably 79 kA/m or higher, and more preferably 120 kA/m or higher.
In a case where the coercive force (Hc) of the magnetic particle is 40 kA/m or higher, the magnetization is unlikely to attenuate and the magnetic force of the magnetic particle continuously acts on the raw material seed, and therefore excellent germination rate can be obtained.
The germination rate is not necessarily improved as the coercive force (Hc) of the magnetic particle becomes higher. On the other hand, the higher the coercive force (Hc) of the magnetic particle becomes, the greater the magnetic force is required for magnetizing the particle.

From such a viewpoint, an upper limit of the coercive force (Hc) of the magnetic particle is preferably 319 kA/m or lower, more preferably 279 kA/m or lower, and even more preferably 239 kA/m or lower.

The coercive force (Hc) of the magnetic particle is a value measured under a condition of an applied magnetic field of 79.6 kA/m under an environment of an atmosphere temperature of 25°C using a vibrating sample magnetometer.

As a measurement apparatus, for example, VSM-P7 manufactured by TOEI INDUSTRY CO., LTD. can be suitably used. However, the measurement apparatus is not limited thereto.

The coercive force (Hc) of the magnetic particle can be adjusted by controlling a crystal structure of the magnetic particle, a particle shape, a composition of the material (for example, the types of additive elements), and the like.

A saturation magnetization ($\delta$s) per unit mass of the magnetic particle is not particularly limited.

As the saturation magnetization ($\delta$s) becomes higher, the germination rate can be improved with a small amount of the magnetic particles.

From such a viewpoint, the saturation magnetization ($\delta$s) of the magnetic particle is preferably 35 Am$^2$/kg or more, and more preferably 40 Am$^2$/kg or more.

An upper limit of the saturation magnetization ($\delta$s) of the magnetic particle is not particularly limited, and is preferably 130 Am$^2$/kg or less and more preferably 80 Am$^2$/kg or less, from the viewpoint of oxidation stability, for example.

The saturation magnetization ($\delta$s) of the magnetic particle is a value measured under the condition of the applied magnetic field of 79.6 kA/m under the environment of the atmosphere temperature of 25°C using the vibrating sample magnetometer.

As a measurement apparatus, for example, VSM-P7 manufactured by TOEI INDUSTRY CO., LTD. can be suitably used. However, the measurement apparatus is not limited thereto.

The material of the magnetic particle (hereinafter appropriately referred to as "magnetic particle material") is not particularly limited.

Examples of the material of the magnetic particle include an alloy (so-called a magnetic alloy) containing a metal showing ferromagnetism such as Fe, Co, and Ni, or an oxide (so-called a magnetic oxide).

The magnetic particle material may contain elements such as Al, Si, S, Sc, Ti, V, Cu, Y, Mo, Rh, Pd, Ag, Sn, Sb, Sm, Te, Ba, Ta, W, Re, Au, Bi, La, Ce, Pr, P, Zn, Sr, and B, in addition to the metal showing ferromagnetism such as Fe, Co, and Ni, from the viewpoints of improvement or adjustment of magnetization and coercive force, amelioration of durability, and the like.

From the viewpoint of improving the germination rate, it is preferable that the magnetic particle has a high saturation magnetization ($\delta$s) as described above. However, a metal with a high saturation magnetization ($\delta$s) tends to corrode, leading to a decrease in a level of magnetization. For such a reason, as the magnetic particle material, a magnetic oxide is preferable, and a magnetic oxide containing Fe as a main component is more preferable, from the viewpoint of preventing demagnetization due to corrosion. The term "main component" referred herein means a component that is contained by 50% by mass or more in a percentage composition of the magnetic oxide.

Examples of magnetic oxide containing Fe as the main component include hexagonal ferrite (barium ferrite, strontium ferrite, and the like), magnetite, $\gamma$-ferrite, and the like.

As the magnetic particle material, a commercially available product that is on the market may be used.

The shape of the magnetic particle is not particularly limited.

Examples of the shape of the magnetic particle include shapes such as acicular, spindle, spherical, tabular, and cubic shapes. The "spherical shape" includes a spheroidal shape, an ovoid shape, and the like, in addition to a true spherical shape.

A size of the magnetic particle is not particularly limited.

An average particle diameter of the magnetic particles is preferably 5 $\mu$m or smaller and more preferably 2 $\mu$m or smaller, from the viewpoint that the raw material seed is covered with the magnetic particles in a state closer to a uniformly covered state.

In a case where the particle diameter of the magnetic particles is too small, thermal fluctuation occurs and magnetization cannot be maintained. Therefore, a lower limit of the average particle diameter of the magnetic particles is generally 0.01 $\mu$m or higher, from the viewpoint of securing the coercive force.

The average particle diameter of the magnetic particles is a value measured by the following method.

The magnetic particles are observed using a transmission electron microscope (TEM). In an image of a captured picture, a projection area of 500 magnetic particles arbitrarily extracted is measured. An equivalent circular diameter is obtained from the measured projection area. A value obtained by arithmetically averaging the obtained value of the equivalent circular diameter is taken as the average particle diameter of the magnetic particles. The equivalent circular diameter is obtained by importing the captured picture of the magnetic particles in image processing software (for example, "ImageJ" manufactured by the National Institutes of Health), performing image processing, and calculating a diameter of a circle having an area equal to the projection area of each particle.

The seed of the present disclosure is a seed having at least one type of the above-described magnetic particles on the surface thereof.

The phrase "having the magnetic particles on the surface thereof' means an aspect in which the magnetic particles are present in contact with the surface of the raw material seed not via other components (hereinafter appropriately referred to as "first aspect"), and an aspect in which a layer containing the magnetic particles (hereinafter appropriately referred to as "magnetic layer") is present in contact with the surface of the raw material seed (hereinafter appropriately referred to as "second aspect"). The second embodiment includes an aspect in which the magnetic particles are present on the surface of the raw material seed via a binding agent.

The magnetic particles or the magnetic layer may be in any state as long as the magnetic particle or the magnetic layer is in a state of being present on at least a part of the surface of the seed. From the viewpoint of improving the germination rate with high efficiency, the magnetic particles or the magnetic layer is preferably present on 1/4 or more of the surface of the raw material seed, more preferably present on 1/2 more of the surface of the raw material seed, and particularly preferably present on the entire surface of the raw material seed.

The aspect in which the magnetic particles are present in contact with the surface of the raw material seed not via other components (that is, the "first aspect") is a preferable aspect in that the magnetic force of the magnetic particles can more effectively act on the raw material seed.

The first aspect can be realized by, for example, allowing the magnetic particles to adhere to the raw material seed of which the surface is wet with water, and then performing drying.

A content of the magnetic particles that adhere to the raw material seed is not particularly limited and can be appropriately set according to the types of plants, a size of the raw material seed, the saturation magnetization ($\delta s$) of the magnetic particles, and the like.

The aspect in which the magnetic layer is present in contact with the surface of the raw material seed (that is, the "second aspect") is a preferable aspect in that the magnetic particles are unlikely to fall off from the raw material seed in a case of sowing, watering, and the like, since the magnetic particles are present on the surface of the raw material seed in a stable state compared to the first aspect.

Examples of a seed having the second aspect include a seed having the magnetic layer containing the magnetic particles and the binding agent on the surface thereof, that is, a seed of which the surface is covered with the magnetic layer containing the magnetic particles and the binding agent.

A content rate of the magnetic particles in the magnetic layer is not particularly limited.

The content rate of the magnetic particles in the magnetic layer is, for example, preferably 25% by mass or more and more preferably 50% by mass or more with respect to a total solid content contained in the magnetic layer, from the viewpoints of increasing the magnetization of the magnetic layer and further improving the germination rate.

An upper limit of the content rate of the magnetic particles in the magnetic layer is not particularly limited, and is, for example, preferably 90% by mass or less from the viewpoint of film hardness of the magnetic layer.

The binding agent is not particularly limited but is, for example, preferably a highly safe binding agent that does not inhibit plant growth, does not affect environments, and the like.

Examples of the binding agent include starch, gelatin, polysaccharides, water-soluble cellulose derivatives, water-soluble resins (water-soluble vinyl polymer derivatives, water-soluble acrylic acid copolymers, polyhydric alcohol polymers, and the like), slaked lime, gypsum (for example, calcined gypsum), clay, and the like.

The term "water-soluble resin" referred herein means a resin having a solubility exceeding 1 g in 100 g of distilled water in a case where the resin is dried at 105°C for 2 hours, and then immersed in the distilled water at 25°C.

These binding agents can contribute not only to ensuring adhesiveness between the seed and the layer but also to the maintenance of dispersibility of the magnetic particles in the magnetic layer.

A content rate of the binding agent in the magnetic layer is not particularly limited, and is preferably from 1% by mass to 50% by mass, and more preferably from 5% by mass to 30% by mass, with respect to the total solid content contained in the magnetic layer.

In addition to the magnetic particles and the binding agent described above, as necessary, the magnetic layer may contain other components such as growth components (organic lime, oil cake, and the like) within a range not hindering the effect thereof.

A thickness of the magnetic layer is not particularly limited and can be appropriately set according to the purpose.

The second aspect can be realized by, for example, applying a liquid containing the binding agent to the surface of the raw material seed, and then allowing the magnetic particle to adhere to the surface, followed by drying. According to such a method, it is easy to cause the magnetic particles to be present on the entire surface of the raw material seed.

In addition, the second aspect can be realized by, for example, applying a mixed liquid containing the magnetic particles and the binding agent to the surface of the raw material seed and then drying.

In addition, the second embodiment can be realized by granulation using the raw material seed, the magnetic particles, the binding agent, and water. A granulation method is not particularly limited, and a known granulation method can be selected.

In regard to the granulation method in a case of using calcined gypsum as the binding agent, it is possible to refer to, for example, a method described in "Iron-Coated Seeds in Wet Direct Seeding Manual 2010 (March 2010:

National Agricultural Research Center for Western Region, National Agriculture and Food Research Organization)."

The seed of the present disclosure may have a covering layer that covers the magnetic particles (or the magnetic layer) from the viewpoint of ameliorating workability.

A material forming the covering layer is not particularly limited, but is, for example, preferably a highly safe material that does not inhibit plant growth, does not affect environments, and the like.

As the material forming the covering layer, for example, clay is suitable.

The magnetic particles in the present disclosure are magnetized magnetic particles.

A method for magnetizing the magnetic particles is not particularly limited, and can be appropriately selected from known magnetization methods. Examples of the method for magnetizing the magnetic particles include a method in which magnetization is performed using a permanent magnet such as a neodymium magnet, a method in which magnetization is performed using a solenoid, and the like.

The magnetic force applied to the magnetic particles is preferably at least three times the coercive force of the magnetic particles in general, from the viewpoint of saturation magnetization of the magnetic particles.

The magnetization may be performed on magnetic particles not covering the raw material seed yet, or on magnetic particles which already have covered the raw material seed. In a case where the seed of the present disclosure is granulated using a steel vessel, in a case where the magnetic particles not covering the raw material seed yet are magnetized, the magnetic particles adhere to the steel vessel, making granulation difficult. Therefore, it is preferable to magnetize the magnetic particles which already have covered the raw material seed.

[Method for Growing Plants]

The method for growing plants of the present disclosure is a method for growing plants by using the seed of the present disclosure described above.

In the method for growing plants of the present disclosure, a seed to be sowed is not particularly limited as long as the effect exhibited by the seed of the present disclosure, that is, the effect in which the germination rate is excellent, is not impaired thereby.

The seed of the present disclosure can be applied to both soil growing and hydroponic growing.

Hereinafter, a preferable example of the method for growing plants of the present disclosure will be described. However, the method for growing plants of the present disclosure is not limited to the following method.

One aspect of the method for growing plants of the present disclosure is a method for growing plants, which includes sowing the seed of the present disclosure in soil.

The method for sowing the seed of the present disclosure in soil is not particularly limited, and can be appropriately selected from known sowing methods depending on the types of plants.

Another aspect of the method for growing plants of the present disclosure is a method for growing plants, which includes sowing the seed of the present disclosure in a growing medium for plants.

The method for sowing the seed of the present disclosure in the growing medium for plants is not particularly limited, and can be appropriately selected from known sowing methods depending on the types of plants. In addition, the growing medium for plants is not particularly limited, and can be appropriately selected from known growing mediums for plants depending on the types of plants.

The growing medium for plants may be a medium used for soil growing, or may be a medium used for hydroponic growing. In addition, the growing medium for plants may be a seedling-raising medium.

The term "seedling-raising medium" means a medium used for raising seedlings until planting out in a hydroponic grow bed or soil. The seedlings raised in the seedling-raising medium are generally planted out together with the medium. In addition, the term "planting out" means transplanting of raised seedlings to a final place where the seedlings will be raised.

In the method for growing plants of the present disclosure, the growing medium for plants is preferable a growing medium for plants in which the magnetized magnetic particles are dispersedly carried by a substrate having voids (hereinafter appropriately referred to as "specific growing medium for plants").

In a case where the seed of the present disclosure is sowed in the specific growing medium for plants, not only the germination rate of the seed is improved but also an elongation rate of leaves, stems, roots, and the like after germination is improved, thereby promoting the growth of plants. Therefore, productivity of plants becomes favorable compared with a case of sowing in a general growing medium for plants.

The reason why the growth of plants is promoted according to the specific growing medium for plants is not clear, but it is considered that the reason is that, in the specific growing medium for plants, the magnetized magnetic particles are dispersedly carried by the substrate having voids, and thus the magnetic force of the magnetic particles exerts a certain action not only on the seed but also on the roots that have entered the voids.

The substrate is not particularly limited as long as the substrate has voids, and can be appropriately selected from known substrates used for growing medium for plants, depending on the types of plants and the like.

The substrate may be a natural product or a synthetic product.

Examples of the substrate include a sponge, cotton (for example, absorbent cotton), rock wool, nonwoven fabrics, and the like.

Among these, the sponge, cotton, or rock wool is preferable as the substrate from the viewpoint of having water absorbing power and water retaining capacity, the sponge or cotton is more preferable from the viewpoint of cost, and the sponge is even more preferable from the viewpoint that the magnetic particles are easily dispersedly carried by the substrate.

In a case of using the specific growing medium for plants as the seedling-raising medium, the rock wool or sponge is preferable as the substrate from the viewpoint of workability of planting out.

The specific growing medium for plants is generally used in an environment in contact with water, and therefore it is preferable that the substrate is formed of a water-insoluble material. In a case where the material forming the substrate is water-insoluble, contamination of the soil or water due to the magnetic particles dispersedly carried by the substrate can be prevented. In a case where the specific growing medium for plants is used for hydroponic growing, it is particularly preferable that the substrate is formed of a water-insoluble material because the substrate is always in contact with water.

The term "water-insoluble material" referred herein means a material having a solubility of 1 g or less in 100 g of distilled water in a case where the material is dried at 105°C for 2 hours, and then immersed in the distilled water at 25°C.

For example, in a case where the substrate is the sponge, examples of a material of the sponge include resins such as vinyl chloride resin, urethane resin, polystyrene, polyethylene, polypropylene, and nitrocellulose, a marine sponge, and the like.

Among these, as the material of the sponge, at least one kind of resin selected from the group consisting of vinyl chloride resin, urethane resin, polystyrene, polyethylene, and nitrocellulose is preferable, and from the viewpoint of cost, the urethane resin is more preferable.

As the urethane resin, it is possible to use, for example, a urethane resin having a structure such as polyester-polyurethane, polyether-polyurethane, polyether-polyester-polyurethane, polycarbonate-polyurethane, polyester-polycarbonate-polyurethane, and polycaprolactone-polyurethane-polyolefin-polyurethane.

As the resin which is the material of the sponge, a resin into which at least one kind of polar group selected from the group consisting of -COOM, $-SO_3M$, $-OSO_3M$, $-P=O(OM)_2$, and $-O-P=O(OM)_2$ (all of which M represents a hydrogen atom or an alkali metal atom), -OH, $-NR_2$, and $-N^+R_3$ (all of which R represents a hydrocarbon group), an epoxy group, -SH, and -CN is introduced as necessary by copolymerization or addition reaction, is preferable from the viewpoint of the dispersibility of the magnetic particles. An amount of such a polar group is preferably $10^{-8}$ mol/g to $10^{-1}$ mol/g, and more preferably $10^{-6}$ mol/g to $10^{-2}$ mol/g.

A weight-average molecular weight of the resin is preferably from 10000 to 200000, and more preferably from 30000 to 150000, from the viewpoints of durability of the medium and the dispersibility of the magnetic particles.

The above-described weight-average molecular weight of the resin is a value measured by gel permeation chromatography (GPC) in terms of polystyrene.

Measurement by gel permeation chromatography (GPC) is performed using HLC (registered trademark)-8020 GPC (TOSOH CORPORATION) as a measurement apparatus, using three TSK gel (registered trademark) Super Multipore HZ-H (4.6 mm ID × 15 cm, TOSOH CORPORATION) columns as a column, and using THF (tetrahydrofuran) as an eluent. In addition, as the measurement conditions, a sample concentration is 0.45% by mass, a flow rate is 0.35 ml/min, an injection amount of the sample is 10 μl, and a measurement temperature is 40°C, and an RI detector is used.

A calibration curve is created based on "standard sample TSK standard, polystyrene:" 8 samples of "F-40," "F-20," "F-4," "F-1," "A-5000," "A-2500," "A-1000," and "n-propylbenzene" of TOSOH CORPORATION.

A size of the void of the substrate is not particularly limited, and is, for example, preferably a size that allows elongated roots to enter.

The magnetic force of the magnetic particle is inversely proportional to the square of a distance from the magnetic particle. Therefore, from the viewpoint of making the magnetic force of the magnetic particles act on the roots more effectively, the size of the void that the substrate has is larger than a thickness of the root is preferably a size as close as possible to the thickness of the root such that the distance between the magnetic particles dispersedly carried by the substrate and the roots entered the voids becomes shorter.

Meanwhile, in a case where the size of the void that the substrate has is larger than the size of the seed of the present disclosure, the seed of the present disclosure is likely to enter the voids. The seed of the present disclosure that has entered the voids may become in state of being unlikely to come into contact with the air, and being immersed in water all the time, and therefore the germination rate may be lowered or the seed may rot in some cases.

From such a viewpoint, in a case where the specific growing medium for plants is used for hydroponic growing, it is preferable that the size of the void that the substrate has is smaller than the size of the seed of the present disclosure.

A void volume in the substrate is not particularly limited, and is preferably 99.5% by volume or less and more preferably 99.0% by volume or less, from the viewpoint of ensuring the strength of the medium, for example.

A lower limit of the void volume in the substrate is not particularly limited, and is, for example, preferably 50.0% by volume or more.

The void volume (unit: % by volume) in the substrate is calculated from an apparent density (unit: g/cm$^3$) and a true density (unit: g/cm$^3$) of the substrate by the following formula. The apparent density of the substrate is calculated by dividing a weight of the substrate by an uncompressed volume in the substrate.

$$\text{Void volume} = 100 - (\text{apparent density/true density} \times 100)$$

For example, in a case where the substrate is the sponge formed of a resin material, the size of the void that the substrate has and the void volume in the substrate can be adjusted by controlling the types and an amount of a foaming agent used at the time of foam molding the sponge, molding conditions (temperature, pressure, and the like), and the like.

A size of the substrate is not particularly limited, and can be appropriately set according to the size of the seed of the present disclosure, the types of plants, and the like.

A shape of the substrate is not particularly limited, and can be appropriately set according to growing environments, the purpose of use, and the like. Examples of the shape of the substrate include shapes such as a columnar shape and a prismatic shape.

The magnetic particles dispersedly carried by the substrate are not particularly limited, and, for example, magnetic particles similar to the magnetic particles in the seed of the present disclosure described above can be preferably used.

The coercive force (Hc) of the magnetic particles is not particularly limited, and is, for example, preferably 40 kA/m or higher, more preferably 79 kA/m or higher, and even more preferably 120 kA/m or higher.

In the case where the coercive force (Hc) of the magnetic particles is 40 kA/m or higher, the magnetization is unlikely to attenuate and the magnetic force of the magnetic particles continuously acts on the seed and the roots, and therefore the effect of improving the germination rate and the effect of promoting the growth of plants are more likely to be exhibited.

As described above, the germination rate is not necessarily improved as the coercive force (Hc) of the magnetic particle becomes higher. The same can be said regarding the growth of plants. On the other hand, the higher the coercive force (Hc) of the magnetic particle becomes, the greater the magnetic force is required for magnetizing the particle.

From such a viewpoint, the upper limit of the coercive force (Hc) of the magnetic particle is preferably 319 kA/m or lower, more preferably 279 kA/m or lower, and even more preferably 239 kA/m or lower.

A content rate of the magnetic particles in the specific growing medium for plants is not particularly limited, and is preferably 4% by mass or more, more preferably 5% by mass or more, and even more preferably 9% by mass or more with respect to a total mass of the specific growing medium for plants, from the viewpoint of improving the germination rate by increasing the magnetization of the specific growing medium for plants, thereby promoting the growth of plants, for example.

The germination rate is not necessarily improved as the content rate of the magnetic particles in the specific growing medium for plants becomes higher. The same can be said regarding the growth of plants. Meanwhile, in a case where a large amount of the magnetic particles are contained in the specific growing medium for plants, the cost increases.

From such a viewpoint, an upper limit of the content rate of the magnetic particles in the specific growing medium for plants is preferably 60% by mass or less, and more preferably 50% by mass or less with respect to the total mass of the specific growing medium for plants.

The magnetic particles in the specific growing medium for plants are the magnetized magnetic particles.

The method for magnetizing the magnetic particles is as described above.

The magnetization may be performed on magnetic particles not being dispersedly carried by the substrate yet, or on magnetic particles which have been dispersedly carried by the substrate.

The specific growing medium for plants in which the magnetized magnetic particles are dispersedly carried can be manufactured by the following method, for example. However, the method for manufacturing the specific growing medium for plants is not limited to the following method.

In a case where the substrate of the specific growing medium for plants is the sponge, it is possible to manufacture the specific growing medium for plants in which the magnetic particles are dispersedly carried by the sponge, by, for example, foam molding a resin composition containing a resin (preferably a urethane resin), the magnetic particles, and the foaming agent.

The foaming agent is not particularly limited, and can be appropriately selected from known foaming agents used for foam molding of resins.

An amount used of the foaming agent is not particularly limited, and can be appropriately set in consideration of the size of void, the void volume, and the like in the substrate.

The magnetization of the magnetic particles may be performed before the foam molding, or may be performed after the foam molding.

In a case where the substrate of the specific growing medium for plants is the cotton, it is possible to manufacture the specific growing medium for plants in which the magnetic particles are dispersedly carried by the cotton, by, for example, applying the magnetic particles to the entire cotton.

In addition, in a case where the substrate of the specific growing medium for plants is the rock wool, it is possible to manufacture the specific growing medium for plants in which the magnetic particles are dispersedly carried by the rock wool, by, for example, applying the magnetic particles to the entire rock wool, similarly to the above case of the cotton.

The magnetization of the magnetic particles may be performed before applying the magnetic particles to the cotton or rock wool, or after the application.

The specific growing medium for plants is preferably manufactured by foam molding the resin composition containing the resin, the magnetic particles, and the foaming agent, from the viewpoint that it is easy to manufacture the growing medium for plants in which the magnetic particles are dispersedly carried by the substrate having the voids, in a uniform state or in a state closer to a uniformly dispersed state.

The method for manufacturing the specific growing medium for plants by foam molding the resin composition containing the resin, the magnetic particles, and the foaming agent is a preferable method also from the viewpoint of mass productivity.

Examples

Hereinafter, the present invention will be described more specifically with reference to examples. The present invention is not limited to the following examples unless the scope of the present invention is not exceeded.

In this example, the coercive force (Hc), the saturation magnetization ($\delta$s), and the average particle diameter of the magnetic particles were measured by the method described above.

The vibrating sample magnetometer (model number: VSM-P7) manufactured by TOEI INDUSTRY CO., LTD. was used as the measurement apparatus for measuring the coercive force (Hc) and the saturation magnetization ($\delta$s) of the magnetic particles.

The ImageJ manufactured by the National Institutes of Health was used as image processing software to measure the average particle diameter of the magnetic particles.

<Example 1>

100 seeds of Eruca sativa Mill (cultivar: ODYSSEY, made in Denmark, certified germination rate: 65%, SAKATA SEED CORPORATION) were immersed in a liquid starch adhesive (30% by mass diluent) obtained by diluting, with water, a commercially available starch adhesive [trade name: EASY PAPER SCREEN PASTE (starch-based adhesive for doors and windows), Asahipen Corporation]. Subsequently, the seeds were taken out from the liquid starch adhesive in which the seeds were immersed, and drained off, and therefore the seeds of which surfaces were covered with the starch adhesive were obtained. Subsequently, the obtained seeds, and magnetic particles (1) [BaFe (barium ferrite), shape: tabular shape, average particle diameter: 0.02 $\mu$m, coercive force (Hc): 203.5 kA/m, saturation magnetization ($\delta$s): 48 A·m$^2$/kg, BET Specific Surface Area value (SSA): 77 m$^2$/g], which were magnetized by using a neodymium magnet (remanent magnetic flux density: 1.2 T), were mixed before the starch adhesive covering the surfaces of the seeds was completely dried. The magnetic particles (1) were allowed to adhere to the surfaces of the seeds, and then surplus magnetic particles (1) adhering to the seeds were brushed off. Subsequently, the seeds were allowed to stand at 25°C for 1 hour to dry the starch adhesive covering the seeds, and therefore seeds of Example 1 of which the surfaces were covered with the magnetic particles (1) were obtained.

When an amount of coverage of the magnetic particles (1) per seed was calculated from diameters of the seeds before and after being covered (before being covered: 1 mm, after being covered: 1.3 mm), and a bulk density (0.90 g/cm$^3$) of the magnetic particles (1), the amount thereof was 0.56 mg.

<Example 2>

Seeds of Example 2 of which surfaces were covered with magnetic particles (2) were obtained by performing the same operation as in Example 1, except that the magnetic particles (2) [BaFe (barium ferrite), shape: tabular shape, average particle diameter: 0.8 $\mu$m, coercive force (Hc): 140.0 kA/m, saturation magnetization ($\delta$s): 62 A·m$^2$/kg, BET specific surface area (SSA): 5.0 m$^2$/g] were used as magnetic particles instead of the magnetic particles (1) in Example 1.

When an amount of coverage of the magnetic particles (2) per seed was calculated from diameters of the seeds before and after being covered (before being covered: 1 mm, after being covered: 1.3 mm), and a bulk density (0.50

g/cm$^3$) of the magnetic particles (2), the amount thereof was 0.31 mg.

<Example 3>

Seeds of Example 3 of which surfaces were covered with magnetic particles (3) were obtained by performing the same operation as in Example 1, except that the magnetic particles (3) [BaFe (barium ferrite), shape: tabular shape, average particle diameter: 0.8 $\mu$m, coercive force (Hc): 220.0 kA/m, saturation magnetization ($\delta$s): 60 A·m$^2$/kg, BET specific surface area (SSA): 5.0 m$^2$/g] were used as magnetic particles instead of the magnetic particles (1) in Example 1.
When an amount of coverage of the magnetic particles (3) per seed was calculated from diameters of the seeds before and after being covered (before being covered: 1 mm, after being covered: 1.3 mm), and a bulk density (0.58 g/cm$^3$) of the magnetic particles (3), the amount thereof was 0.36 mg.

<Comparative Example 1>

100 seeds of Eruca sativa Mill used in Example 1 were used as seeds of Comparative Example 1.

<Comparative Example 2>

Perlite [trade name: pearlite, shape: granular, Akagiengei] was pulverized using a mortar and pestle, and made into a powder form.
100 seeds of Eruca sativa Mill (cultivar: ODYSSEY, made in Denmark, certified germination rate: 65%, SAKATA SEED CORPORATION) were immersed in the liquid starch adhesive (30% by mass diluent) obtained by diluting, with water, a commercially available starch adhesive [trade name: EASY PAPER SCREEN PASTE (starch-based adhesive for doors and windows), Asahipen Corporation]. Subsequently, the seeds were taken out from the liquid starch adhesive in which the seeds were immersed, and drained off, and therefore the seeds of which surfaces were covered with the starch adhesive were obtained.
Subsequently, the obtained seeds and the perlite in the powder form obtained as above were mixed before the starch adhesive covering the surfaces of the seeds was completely dried. The perlite was allowed to adhere to the surfaces of the seeds, and then surplus perlite adhering to the seeds was brushed off. Subsequently, the seeds were allowed to stand at 25°C for 1 hour to dry the starch adhesive covering the seeds, and therefore the seeds of which the surfaces were covered with the perlite were obtained (hereinafter referred to as "pearlite-covered seeds").
100 parts by mass of the liquid starch adhesive (30% by mass diluent) obtained by diluting, with water, a commercially available starch adhesive [trade name: EASY PAPER SCREEN PASTE (starch-based adhesive for doors and windows), Asahipen Corporation] were mixed with 100 parts by mass of organic lime and 100 parts by mass of oil cake as growth components, and therefore a mixture was obtained. Using the obtained mixture, spherical pellets having a diameter of about 5 mm were produced.
One pearlite-covered seed obtained above was embedded per pellet in the produced pellets. Subsequently, the pellets embedded with the pearlite-covered seeds were allowed to stand at 25°C for 1 hour to dry the starch adhesive contained in the pellets, and therefore seeds of Comparative Example 2 [layer composition: seed/perlite/growth components (organic lime + oil cake)] were obtained.

<Comparative Example 3>

Pearlite-covered seeds were obtained by performing the same operation as in Comparative Example 2.
100 parts by mass of the liquid starch adhesive (30% by mass diluent) obtained by diluting, with water, a commercially available starch adhesive [trade name: EASY PAPER SCREEN PASTE (starch-based adhesive for doors and windows), Asahipen Corporation], 100 parts by mass of organic lime and 100 parts by mass of oil cake as growth components, and 10 parts by mass of the magnetic particles (1) magnetized by using the neodymium magnet were mixed, and therefore a mixture was obtained. Using the obtained mixture, spherical pellets having a diameter of about 5 mm were produced.
The same operation as in Comparative Example 2 was performed by using the produced pellet, and therefore seeds of Comparative Example 3 [layer composition: seed/perlite/[growth components (organic lime + oil cake) + magnetic particles (1)]] were obtained.

<Comparative Example 4>

Pearlite-covered seeds were obtained by performing the same operation as in Comparative Example 2.
100 parts by mass of the liquid starch adhesive (30% by mass diluent) obtained by diluting, with water, a commercially available starch adhesive [trade name: EASY PAPER SCREEN PASTE (starch-based adhesive for doors and windows), Asahipen Corporation], 100 parts by mass of organic lime and 100 parts by mass of oil cake as growth components, and 100 parts by mass of the magnetic particles (1) magnetized by using the neodymium magnet were mixed, and therefore a mixture was obtained. Using the obtained mixture, spherical pellets having a diameter of about 5 mm were produced.

The same operation as in Comparative Example 2 was performed by using the produced pellet, and therefore seeds of Comparative Example 4 [layer composition: seed/perlite/[growth components (organic lime + oil cake) + magnetic particles (1)]] were obtained.

[Growth Test]

[Experiment 1: Growth with Absorbent Cotton]

The seeds of Examples 1 to 3 and Comparative Examples 1 to 4 were grown, and a final germination rate (unit: %) and a yield (unit: %) were evaluated. The results are shown in Table 1 and Fig. 1.

<Test Example 1-1>

A Petri dish with a diameter of 90 mm was laid with the absorbent cotton so that a thickness of the cotton became about 3 mm, and then the seeds of Example 1 were sowed on the absorbent cotton so as not to overlap each other. Subsequently, after irrigation to such a degree that the seeds were immersed, growing was carried out in a room having an air temperature of about 17°C to 20°C. The Petri dish in which the seeds were sowed was placed in a dark place for 2 days for germination, and then the dish was moved to a light place for spindly growth. Water was added as appropriate.

After sowing, the number of germinated seeds was continuously measured so as to calculate a germination rate. Then, a germination rate at a moment at which the germination rate became almost constant, that is, 12 days after sowing, was taken as the final germination rate.

In addition, 14 days after sowing, a length of a principal axis of an aerial part was measured, a plant grown to have the length of 21 mm or longer was judged as a good product, and the yield was calculated according to Formula (1).

$$\text{Yield (\%)} = (\text{number of good products/number of times of sowing}) \times 100 \qquad (1)$$

Values of the final germination rate and the yield were rounded to tenths after the decimal point.

<Test Example 1-2>

A final germination rate and a yield were calculated by carrying out growing in the same manner as in Test Example 1-1 except that the seeds of Example 2 were used instead of the seeds of Example 1 in Test Example 1-1.

<Test Example 1-3>

A final germination rate and a yield were calculated by carrying out growing in the same manner as in Test Example 1-1 except that the seeds of Example 3 were used instead of the seeds of Example 1 in Test Example 1-1.

<Comparative Test Example 1-1>

A final germination rate and a yield were calculated by carrying out growing in the same manner as in Test Example 1-1 except that the seeds of Comparative Example 1 were used instead of the seeds of Example 1 in Test Example 1-1.

<Comparative Test Example 1-2>

A final germination rate and a yield were calculated by carrying out growing in the same manner as in Test Example 1-1 except that the seeds of Comparative Example 2 were used instead of the seeds of Example 1 in Test Example 1-1.

<Comparative Test Example 1-3>

A final germination rate and a yield were calculated by carrying out growing in the same manner as in Test Example 1-1 except that the seeds of Comparative Example 3 were used instead of the seeds of Example 1 in Test Example 1-1.

<Comparative Test Example 1-4>

A final germination rate and a yield were calculated by carrying out growing in the same manner as in Test Example 1-1 except that the seeds of Comparative Example 4 were used instead of the seeds of Example 1 in Test Example 1-1.

The symbol "-" in Table 1 means that measurement or calculation was not performed.

[Table 1]

|  | Seed | Layer composition of seed | Final germination rate (%) | Yield (%) | Average plant height of good product (mm) |
|---|---|---|---|---|---|
| Test Example 1-1 | Example 1 | Seed/magnetic particles (1) | 93 | 82 | 30 |
| Test Example 1-2 | Example 2 | Seed/magnetic particles (2) | 93 | 80 | 31 |
| Test Example 1-3 | Example 3 | Seed/magnetic particles (3) | 92 | 75 | 30 |
| Comparative Test Example 1-1 | Comparative Example 1 | Only seed | 71 | 59 | 31 |
| Comparative Test Example 1-2 | Comparative Example 2 | Seed/perlite/growth components (organic lime + oil cake) | 17 | - | - |
| Comparative Test Example 1-3 | Comparative Example 3 | Seed/perlite/[growth components (organic lime + oil cake) + magnetic particles (1) <3.2% by mass>] | 26 | - | - |
| Comparative Test Example 1-4 | Comparative Example 4 | Seed/perlite/[growth components (organic lime + oil cake) + magnetic particles (1) <25% by mass>] | 42 | - | - |

As shown in Table 1 and Fig. 1, all of the final germination rates of the seeds of Examples 1 to 3 which have magnetized magnetic particles having the coercive force of 40 kA/m or higher on the surface thereof were higher than the final germination rate of the seeds of Comparative Example 1 which do not have the magnetic particles on the surface thereof.

In addition, as shown in Table 1 and Fig. 1, the seeds of Examples 1 to 3 showed a yield higher than that of the seeds of Comparative Example 1.

The seeds of Comparative Examples 2 to 4 which have a pearlite layer between the seed and the layer containing the magnetic particles, and which are not in the aspect of having the magnetic particles on the surface thereof, had a final germination rate significantly lower than that of the seeds of Examples 1 to 3.

[Experiment 2: Growing in Magnetic Particles-Containing Medium]

The seeds of Example 1 were sown in a medium containing magnetic particles (that is, a magnetic particles-containing medium) and grown, and a final germination rate (unit: %) and a yield (unit: %) were evaluated. The results are shown in Table 2.

(Manufacturing Example A)

The magnetic particles (1) magnetized by using the neodymium magnet were applied to the entire cotton absorbent cotton (void volume: 98.2% by volume), and therefore a magnetic particles-containing medium (A) in which the magnetized magnetic particles (1) were distributed almost uniformly in the absorbent cotton was obtained. A content rate of the magnetized magnetic particles (1) in the magnetic particles-containing medium (A) was 4.8% by mass with respect to a total mass of the magnetic particles-containing medium (A).

(Manufacturing Example B)

A magnetic particles-containing medium (B) in which the magnetized magnetic particles (1) were distributed almost uniformly in the absorbent cotton was obtained by performing the same operation as in Manufacturing Example A except that an amount used of the magnetic particles (1) was changed in Manufacturing Example A. A content rate of the magnetized magnetic particles (1) in the magnetic particles-containing medium (B) was 9% by mass with respect to a total mass of the magnetic particles-containing medium (B).

<Test Example 2-1>

A final germination rate and a yield were calculated by carrying out growing in the same manner as in Test Example 1-1 except that the magnetic particles-containing medium (A) containing the magnetized magnetic particles (1) was used as a medium instead of the absorbent cotton not containing the magnetized magnetic particles (1) in Test Example 1-1.

<Test Example 2-2>

A final germination rate and a yield were calculated by carrying out growing in the same manner as in Test Example 1-1 except that the magnetic particles-containing medium (B) containing the magnetized magnetic particles (1) was used as a medium instead of the absorbent cotton not containing the magnetized magnetic particles (1) in Test Example 1-1.

[Table 2]

| | Seed | Medium | Layer composition of seed | Final germination rate (%) | Yield (%) | Average plant height of good product (mm) |
|---|---|---|---|---|---|---|
| Test Example 1-1 | Example 1 | Absorbent cotton | Seed/ magnetic particles (1) | 93 | 82 | 30 |
| Comparative Test Example 1-1 | Comparative Example 1 | Absorbent cotton | Only seed | 71 | 59 | 31 |
| Test Example 2-1 | Example 1 | Magnetic particles-containing medium (A) (substrate: absorbent cotton) | Seed/ magnetic particles (1) | 93 | 84 | 33 |
| Test Example 2-2 | Example 1 | Magnetic particles-containing medium (B) (substrate: absorbent cotton) | Seed/ magnetic particles (1) | 98 | 88 | 35 |

As shown in Table 2, when the seeds of Example 1 were sown in the magnetic particles-containing medium, it was recognized that the yield was improved compared with the case in which the absorbent cotton not containing the magnetic particles was used as a medium.

**Claims**

1. A seed comprising:
a magnetized magnetic particle on a surface of the seed, **characterized in that** the magnetized magnetic particle has a coercive force of 40 kA/m or higher, wherein the coercive force is measured under a condition of an applied magnetic field of 79.6 kA/m under an environment of an atmosphere temperature of 25 °C using a vibrating sample magnetometer.

2. The seed according to claim 1,
wherein the coercive force is from 40 kA/m to 319 kA/m.

3. The seed according to claim 1,
wherein the coercive force is from 120 kA/m to 239 kA/m.

4. The seed according to any one of claims 1 to 3,
wherein a saturation magnetization of the magnetic particle is 35 Am$^2$/kg or higher.

5. The seed according to any one of claims 1 to 3,
wherein a saturation magnetization of the magnetic particle is from 35 Am$^2$/kg to 130 Am$^2$/kg.

6. The seed according to any one of claims 1 to 3,
wherein a saturation magnetization of the magnetic particle is from 40 Am$^2$/kg to 80 Am$^2$/kg.

7. The seed according to any one of claims 1 to 6, further comprising:
a magnetic layer that includes the magnetic particle and a binding agent on the surface of the seed.

8. A method for growing plants, comprising:
sowing the seed according to any one of claims 1 to 7 in soil.

9. A method for growing plants, comprising:
sowing the seed according to any one of claims 1 to 7 in a growing medium for plants.

10. The method for growing plants according to claim 9,
wherein the growing medium for plants includes a substrate having voids, and a magnetized magnetic particle dispersedly carried by the substrate.

**Patentansprüche**

1. Saatgut, umfassend:
ein magnetisiertes Magnetpartikel auf einer Oberfläche des Saatguts, **dadurch gekennzeichnet, dass** das magnetisierte Magnetpartikel eine Koerzitivkraft von 40 kA/m oder mehr aufweist, wobei die Koerzitivkraft unter der Bedingung eines angelegten Magnetfelds von 79,6 kA/m in einer Umgebung mit einer Umgebungstemperatur von 25°C unter Verwendung eines Vibrationsproben-Magnetometers gemessen wird.

2. Saatgut nach Anspruch 1,
wobei die Koerzitivkraft im Bereich von 40 kA/m bis 319 kA/m liegt.

3. Saatgut nach Anspruch 1,
wobei die Koerzitivkraft im Bereich von 120 kA/m bis 239 kA/m liegt.

4. Saatgut nach einem der Ansprüche 1 bis 3,
wobei eine Sättigungsmagnetisierung des Magnetpartikels 35 Am$^2$/kg oder mehr beträgt.

5. Saatgut nach einem der Ansprüche 1 bis 3,
wobei eine Sättigungsmagnetisierung des Magnetpartikels im Bereich von 35 Am$^2$/kg bis 130 Am$^2$/kg liegt.

6. Saatgut nach einem der Ansprüche 1 bis 3,

wobei eine Sättigungsmagnetisierung des Magnetpartikels im Bereich von 40 Am$^2$/kg bis 80 Am$^2$/kg liegt.

7. Saatgut nach einem der Ansprüche 1 bis 6, ferner umfassend :
eine magnetische Schicht, die das Magnetpartikel und ein Bindemittel auf der Oberfläche des Saatguts enthält.

8. Verfahren zur Kultivierung von Pflanzen, umfassend:
Aussaat des Saatguts nach einem der Ansprüche 1 bis 7 in einen Boden.

9. Verfahren zur Kultivierung von Pflanzen, umfassend:
Aussaat des Saatguts nach einem der Ansprüche 1 bis 7 in ein Kulturmedium für Pflanzen.

10. Verfahren nach Anspruch 9,
wobei das Kulturmedium für Pflanzen ein Substrat mit Vertiefungen und ein magnetisiertes Magnetpartikel, das von dem Substrat dispergiert getragen wird, enthält.


**Revendications**

1. Semence, comprenant :
une particule magnétique magnétisée sur une surface de la semence, **caractérisée en ce que** la particule magnétique magnétisée présente une force coercitive supérieure ou égale à 40 kA/m, dans laquelle la force coercitive est mesurée sous une condition d'un champ magnétique appliqué de 79,6 kA/m dans un environnement d'une température atmosphérique de 25 °C à l'aide d'un magnétomètre d'échantillon vibrant.

2. Semence selon la revendication 1,
dans laquelle la force coercitive s'étend de 40 kA/m à 319 kA/m.

3. Semence selon la revendication 1,
dans laquelle la force coercitive s'étend de 120 kA/m à 239 kA/m.

4. Semence selon l'une quelconque des revendications 1 à 3,
dans laquelle une aimantation à saturation de la particule magnétique est supérieure ou égale à 35 Am$^2$/kg.

5. Semence selon l'une quelconque des revendications 1 à 3,
dans laquelle une aimantation à saturation de la particule magnétique s'étend de 35 Am$^2$/kg à 130 Am$^2$/kg.

6. Semence selon l'une quelconque des revendications 1 à 3,
dans laquelle une aimantation à saturation de la particule magnétique s'étend de 40 Am$^2$/kg à 80 Am$^2$/kg.

7. Semence selon l'une quelconque des revendications 1 à 6, comprenant en outre :
une couche magnétique, laquelle inclut la particule magnétique et un agent liant sur la surface de la semence.

8. Procédé pour la culture de plantes, comprenant l'étape suivante :
semer la semence selon l'une quelconque des revendications 1 à 7 dans un sol.

9. Procédé pour la culture de plantes, comprenant l'étape suivante :
semer la semence selon l'une quelconque des revendications 1 à 7 dans un milieu de culture pour plantes.

10. Procédé selon la revendication 9,
dans lequel le milieu de culture pour plantes inclut un substrat présentant des creux, et une particule magnétique magnétisée supportée de manière dispersée par le substrat.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3539651 B
- JP 3493099 B
- EP 0236088 A2
- JP 2001269051 A
- JP 2012160486 A
- JP 3539651 A
- JP 3493099 A

**Non-patent literature cited in the description**

- Iron-Coated Seeds in Wet Direct Seeding Manual 2010. National Agricultural Research Center for Western Region, National Agriculture and Food Research Organization, March 2010